# EUROPEAN PATENT SPECIFICATION

(11) **EP 4 280 928 B1**
(45) Date of publication and mention of the grant of the patent: **22.07.2026**
(21) Application number: 21830728.8
(22) Date of filing: 14.12.2021
(51) Int. Cl.: A47L 9/28, G05D 1/00

(54) **A COLLISION DETECTION SYSTEM FOR A MOBILE ROBOT**
KOLLISIONSERKENNUNGSSYSTEM FÜR EINEN MOBILEN ROBOTER
SYSTÈME DE DÉTECTION DE COLLISION POUR UN ROBOT MOBILE

(30) Priority: 22.01.2021 GB 202100846
(43) Date of publication of application: 29.11.2023
(73) Proprietor: DYSON TECHNOLOGY LIMITED, Malmesbury Wiltshire SN16 0RP (GB)
(72) Inventor: ORCHARD, James, Malmesbury Wiltshire SN16 0RP (GB); BIRDWOOD, Christopher, Malmesbury Wiltshire SN16 0RP (GB); EVANS, Joseph, Malmesbury Wiltshire SN16 0RP (GB)
(74) Representative: Dyson IP Department
(86) International application number: PCT/GB2021/053270
(87) International publication number: WO 2022/157468

(56) References cited:
- WO-A1-2013/125992
- WO-A1-2018/125222
- GB-A- 2 494 447
- GB-A- 2 574 417

## Description

### TECHNICAL FIELD

This invention relates to an autonomous vacuum cleaner and, more generally, to a mobile robotic device, equipped with the facility to detect collision with obstacles.

### BACKGROUND TO THE INVENTION

Mobile robots are becoming increasingly commonplace and are used in diverse fields such as space exploration, lawn mowing and floor cleaning. The last decade or so has seen particularly rapid advancement in the field of robotic floor cleaning devices, especially vacuum cleaners, the primary objective of which is to navigate an owner's home autonomously and unobtrusively whilst cleaning a floor surface.

In performing this task, a robotic vacuum cleaner has to navigate the area which it is required to clean and avoid colliding with obstacles whilst doing so. Typically, a robotic vacuum cleaner will include a bumper assembly featuring a moveable bumper, which might form part of an outer shell of the robot, and one or more sensors arranged to detect movement of the bumper relative to a chassis of the robot.

Although such bumper assemblies function adequately as a means for detecting when the robot comes into contact with heavy obstacles, they function less than adequately when coming into contact with light obstacles, such as, for example, a wine glass placed on the floor surface. In some instances, the robot does not register that it has collided with a light obstacle and will simply push the obstacle around as opposed to taking corrective action to avoid it.

GB2494447 discloses a mobile robot with a chassis, drive system and an outer plan profile with wheels mounted inboard, and these wheels are driven to propel the appliance in a direction of movement where a surface treating assembly with a surface treating head extends tangentially to the respective circular portions of the outer plan profile.

WO2018/125222 discloses a mobile robot with a shell moveably mounted using a shell suspension system and a sensor assembly configured to sense distance and has a magnet with hall effect sensors so that the relative motion of the robot causes the sensors to produce differing output signals.

WO2013/125992 discloses a robot lawnmower with a collision sensor which causes the robot to respond. It uses a joystick element fitted to the chassis and when the lawnmower collides with an obstacle, it moves relative to the chasis and returns to neutral position after the collision.

GB2574417 discloses a vision system for a mobile robot using a lens and an illumination system with a reflective surface for reflecting the light away from the lens module.

It is against this background that the invention has been devised.

### SUMMARY OF THE INVENTION

According to a first aspect of the invention, there is provided a mobile robot comprising a chassis, a drive system and a collision detection system. The collision detection system comprises first and second parts of the mobile robot, the first and second body parts being disconnected and moveable relative to the chassis in response to a collision with an object, and first and second sensing means configured to sense relative movement between the chassis and the first and second body parts respectively and, in a collision event, to send a control signal causing the drive system to take corrective action, wherein the mass of the second body part is substantially lower than the mass of the first body part.

The second body part may be a bumper assembly moveable relative to the chassis in response to a force applied thereto during a collision event. The bumper assembly may comprise an inner bumper section comprising a plurality of rigid segments collectively arranged to extend laterally along one side the mobile robot, the inner bumper section being configured such that each rigid segment of the plurality of rigid segments is displaceable relative to the other rigid segments of the plurality of rigid segments in response to a force applied thereto during a collision event. The plurality of rigid segments may be connected by flexible joints. The flexible joints may be living hinges.

The second sensing means may comprise a second switch array, each switch of the second switch array being located between the chassis and a respective rigid segment of the plurality of rigid segments and wherein the collision detection system is operable to cause the drive arrangement to take corrective action if a switch of the second switch array is actuated by the displacement of its respective rigid segment of the plurality of rigid segments during a collision event.

The bumper assembly may comprise an outer bumper section adjacent the inner bumper section, the outer bumper section being reversibly deformable in response to a force applied thereto during a collision event to displace one or more rigid segments of the plurality of rigid segments. The outer bumper section may define a continuous surface substantially extending across the plurality of rigid segments of the inner bumper section. The outer bumper section may comprise corner sections covering intersections between the one side and adjacent sides of the mobile robot, the corner sections being deformable to displace the outermost rigid segments of the plurality of rigid segments in response to a force applied thereto during a collision with an object oblique to the direction of travel of the mobile robot.

The mass of the bumper assembly may be defined by the inner and outer bumper sections. The first body part may be an outer shell displaceable relative to the chassis in the longitudinal and lateral directions of the mobile robot in response to a force applied thereto during a collision event.

The mobile robot may further comprise a first second biasing means connected to the chassis for applying a restoring force to the outer shell following a lateral displacement of the outer shell in order to return the outer shell to its initial lateral position with respect to the chassis. The mobile robot may further comprise a second biasing means for applying a restoring force to the outer shell following a longitudinal displacement of the outer shell in order to return the outer shell to its initial longitudinal position with respect to the chassis.

The first sensing means may comprise a first switch array, each switch of the first switch array being located between the chassis and the outer shell, wherein the collision detection system is operable to cause the drive arrangement to take corrective action if a switch of the first switch array is actuated by the displacement of the outer shell during a collision event. At least one switch of the first switch array may be arranged to be actuated by a lateral displacement of the outer shell and at least one other switch of the first switch array is arranged to be actuated by a longitudinal displacement of the outer shell.

The second biasing means may comprise an activating arm pivotally connected to the chassis, the activating arm being moveable by a longitudinal displacement of the outer shell to actuate the at least one other switch of the first switch array.

The mobile robot may further comprise at least one other component rigidly connected to the outer shell, wherein the mass of the outer shell is defined by the outer shell and the least one other component.

The corrective action may comprise reflex action that immediately follows the collision event, the reflex action comprises reversing the manoeuvres of the robot immediately preceding the collision event.

### BRIEF DESCRIPTION OF THE DRAWINGS

Embodiments of the invention will now be described, by way of example only, with reference to the accompanying drawings, in which:
FIG. 1 is a perspective view of a mobile robot in accordance with the invention;
FIG. 2 is an exploded perspective view of the mobile robot of FIG. 1 showing its principle parts;
FIG. 3 is a system diagram of the electronic control system of the mobile robot of FIG. 1;
FIG. 4 is exploded perspective view of the mobile robot of FIG. 1 showing the components of a collision detection system;
FIG. 5a, 5b, 5c are schematic views of the mobile robot of FIG. 1 in example "collision events"; and,
FIG. 6a, 6b, 6c, are schematic views of the mobile robot of FIG. 1 in further examples of "collision events".

In the drawings, like features are denoted by like reference signs.

### SPECIFIC DESCRIPTION

Specific embodiments of the invention will now be described in which numerous features will be discussed in detail in order to provide a thorough understanding of the inventive concept as defined by the appended claims. However, it will be apparent to the skilled reader that the invention may be put in to effect without the specific details and that, in some instances, well known methods, techniques and structures have not been described in detail in order not to obscure the inventive concept unnecessarily.

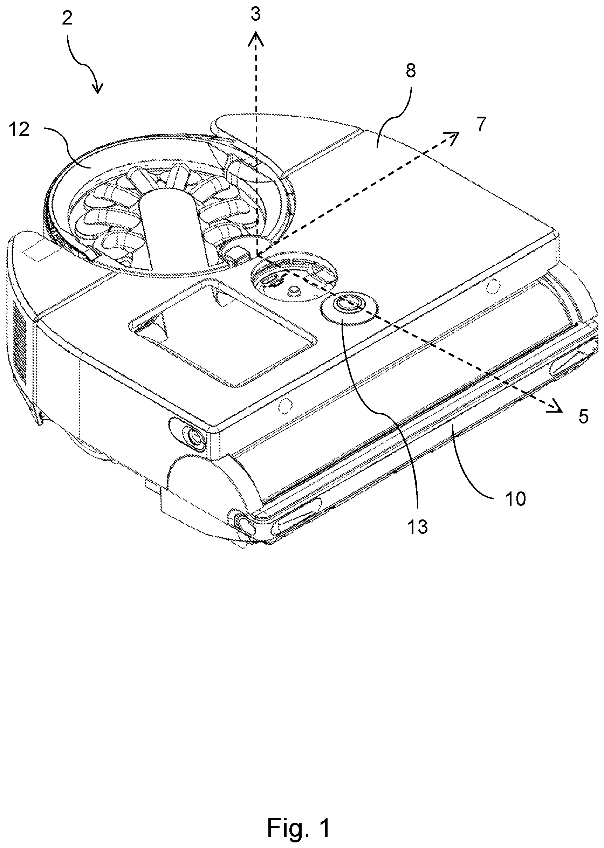

FIG. 1 shows a mobile robot 2 (hereinafter "the robot 2") in accordance with an embodiment of the invention. In this embodiment, the robot 2 is shown in the context of a vacuum cleaning robot, although it should be appreciated that this is not essential to the invention and that the invention is applicable to any mobile robot, in a domestic setting or otherwise. The robot 2 includes sufficient processing and sensing capability that enables it to navigate around a room with the aid of a suitable on-board navigation system, cleaning a floor surface as it goes. As will be appreciated from FIG. 1, the robot 2 is generally semi-circular shaped, largely for reasons of manoeuvrability, and has a vertical axis 3 extending substantially vertically relative to the surface on which the robot 2 travels. The vertical axis 3 extends substantially normal to a longitudinal axis 5, which is orientated in the fore-aft direction of the robot 2, and a transverse axis 7, which extends in the lateral, side-side direction of the robot 2.

The robot 2 is powered by a rechargeable power source in the form of an internal battery pack (not shown). Such a battery pack is generally known in the art and comprises a plurality of cells of a variety of cell chemistries. Cell chemistries in the lithium-ion family are currently preferred due to their high power density, low charge loss and lack of memory effect, although other cell chemistries, such as nickel metal hydride and nickel cadmium, are also acceptable. Typically, the robot 2 would be dockable with an associated base station able to provide charging energy for recharging the battery pack when it nears a depleted state. Alternatively, the robot 2 may be directly connected to a mains electrical outlet to receive a source of electrical power for recharging the battery pack.

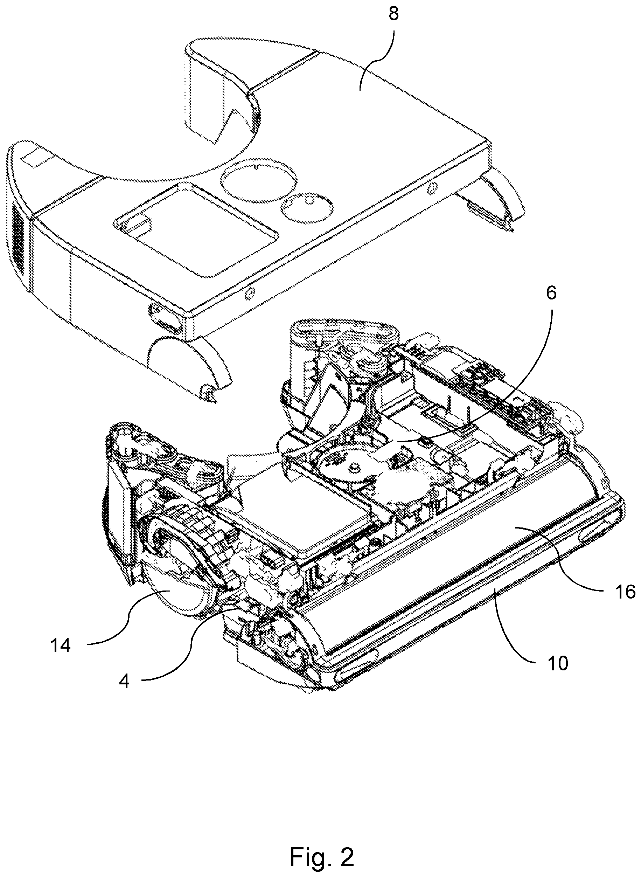

With reference to FIG. 2, the robot 2 comprises five principle parts: a chassis 4, whose primary function is as a platform for carrying drive and cleaning systems of the robot 2; a body 6 which is fixed on the chassis 4; a generally semi-circular outer shell 8 mountable on the chassis 4; a bumper assembly 10 mountable on the shell 8; and, a separating apparatus 12 that is carried on a rearward part of the shell 8 and which protrudes through a complementary shaped cut-out of the shell 8. An omnidirectional camera 13, positioned on top of the robot 2 for providing the robot 2 a panoramic view of its surroundings, which forms part of a camera-based sensing system.

For the purpose of this description, terms such as 'front' and 'rear', in the context of the robot 2, are used in the sense of its forward and reverse directions during operation, with the separating apparatus 12 being positioned at the rear of the robot 2. Similarly, the terms 'left' and 'right' will be used with reference to the direction of forward movement of the robot 2.

The chassis 4 supports several components of the robot 2 and is preferably manufactured from a high-strength injection moulded plastics material, such as ASB (acrylonitrile butadiene styrene), although it could alternatively be made from appropriate metals such as aluminium or steel, or composite materials such as a carbon fibre composite.

The drive system is operable to propel the robot 2 about its environment. The drive system includes a pair of traction units 14 located on either side of the robot 2, although it should be appreciated that the precise form of the traction units 14 is not central to the invention. However, in this particular embodiment, the traction units 14 are electrically driven caterpillar-track units having a continuous rubberized belt or track constrained around leading and trailing pulley wheels. The traction units 14 are mounted on opposite sides of the chassis 4 and are independently operable to enable the robot 2 to be driven in forward and reverse directions, to follow a curved path towards the left or right, or to turn on the spot in either direction depending on the speed and rotational direction of the traction units 14. Such an arrangement is well known, and so it will not be described in further detail here.

In order to clean the floor surface, the robot 2 also includes a cleaner head 16, which forms part of the cleaning system carried by the chassis 4 and is located in front of the traction units 14. Although not shown in the figures, the cleaner head 16 includes a rotatable agitator assembly that works to beat dirt and dust particles from the floor surface. A suitable vacuum generator in the form of a suction motor, also not shown, is provided in fluid communication with the cleaner head 16 to draw dirt bearing air flow into and through the cleaner head 16, and into the separating apparatus 12. The precise configuration of these components is not essential to the inventive concept, and so further detail is omitted. However, it should be noted that components such as cleaner heads, agitator assemblies and separating apparatuses are well known, particularly in the context of robotic vacuum cleaners.

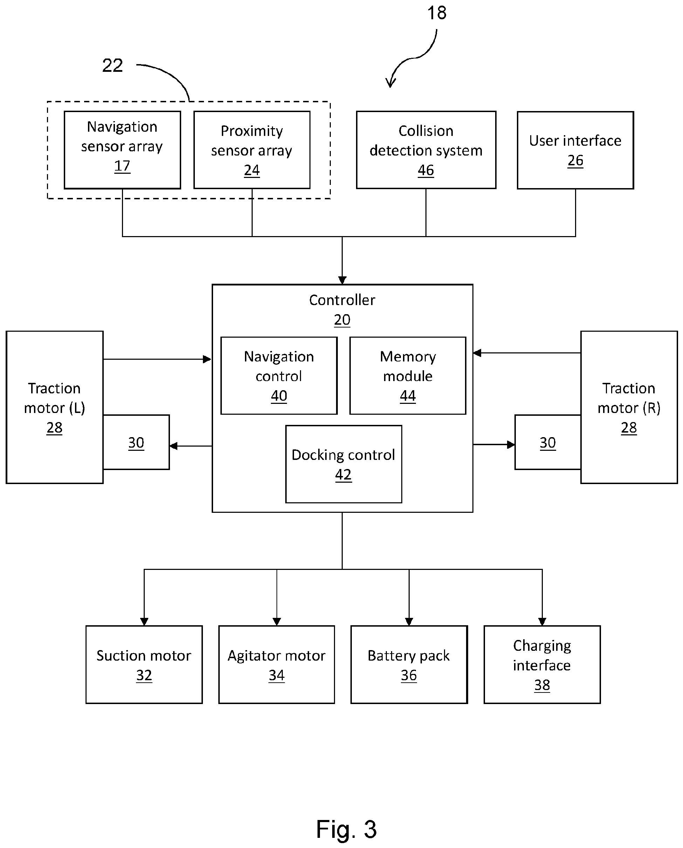

FIG. 3 shows schematically a control system 18 of the robot 2 and its interfaces with the components described above. The control system 18 includes a controller 20 having appropriate control circuitry and processing functionality to process signals received from its various sensors and to drive the robot 2 in a suitable manner. The controller 20 is integrated into a sensor suite 22, by which the robot 2 gathers information about its environment in order to map its environment and perform a cleaning route. The sensor suite 22 includes the navigation sensor array 17 that includes the camera-based sensing system, comprising the omnidirectional 13, and a near-field proximity sensor array 24 to provide the robot 2 with the capacity to detect obstacles.

A user interface 26 is provided in order for a user to command the robot 2 to start / stop a cleaning process, for example. The user interface 26 may take various forms, such as one or more mechanical buttons or even a graphical user interface with touch screen technology.

The controller 20 is also configured to supply drive signals to motors 28 associated with the traction units 14 and also to receive odometry data from the traction units 14. For this purpose suitable rotational sensing means 30, such as rotary encoders, are provided on the motors 28.

Suitable power and control inputs are provided to the suction motor 32 and an agitator motor 34 for driving the agitator assembly. Finally, a power input is provided to the controller 20 from the battery pack 36 and a charging interface 38 of a charging system is provided by which means the controller 20 can carry out charging of the battery pack 36 when, for example, the battery supply voltage has dropped below a predetermined threshold.

The controller 20 includes a navigation control module 40 that is responsible for guiding the robot 2 around a room to perform a cleaning function. The navigation control module 40 receives image data from the navigation sensor array 17, most particularly the camera-based sensing system, and is operable to locate itself within its surrounding environment and to run through a suitable cleaning pattern in order to vacuum the floor surface. In an example scenario, the robot 2 begins a cleaning operation located on the base station whereby the robot 2 will set its initial location on its internal map as its origin at 0, 0 coordinates in a global reference frame. The robot 2 then proceeds to navigate around the room whilst cleaning whereby it returns to the base station at an appropriate time, for example when the battery supply voltage has dropped below the predetermined threshold. The navigation control module 40 therefore implements suitable localisation and mapping functionality to enable the robot 2 to navigate around the room and return to its original position which, in this scenario, is the location of the base station (0, 0 coordinates).

When returning the robot 4 to the base station, the navigation control module 40 aims to place the robot 2 in front of and as close to the base station as possible, following which control of the robot 2 is handed over to a docking control module 42, also provided as a functional part of the controller 20, to initiate a "docking run" to return the robot 2 to its original position. The precise workings of the navigation and docking control modules 40, 42 are not central to the invention, and so further detail is not provided.

A memory module 44 is provided for storage data generated and used by the navigation and the docking control modules 40, 42 as well as for other tasks performed by the controller 20, which might include predetermined cleaning operations. For example, the memory module 44 serves to store mapping data and route data generated and used by the navigation control module 40. The specific type of memory form is not central to the invention and will not be described in detail here. Needless to say, however, that the memory module 44 may be an appropriate on-board memory of the controller 20 and will have sufficient capacity and an access speed suitable for the controller 20.

The control system 18 further comprises a collision detection system 46, which functions to detect when the robot 2 has collided with an obstacle - that is to say, the occurrence of a "collision event" - and send one or more control signals causing the drive system to take corrective action. The collision detection system 46 comprises first and second principle parts of the robot 2, which, in this embodiment, are the shell 8 and bumper assembly 10 respectively. The collision detection system 46 further comprises first and second sensing means for sensing relative movement between the chassis 4, or the body 6 as it is fixedly secured to the chassis 4, and the shell 8 and bumper assembly 10, which is then used by the collision detection system 46 to gather information about collisions with objects in the path of the robot 2. The bumper assembly 10 has a mass substantially lower than the mass of the shell 8. The difference in mass more pronounced when the shell 8 is configured to carry and move with other components of the robot 2, such as, for example, the omnidirectional camera 13 and / or the user interface 26, which increases the effective mass of the shell 8.

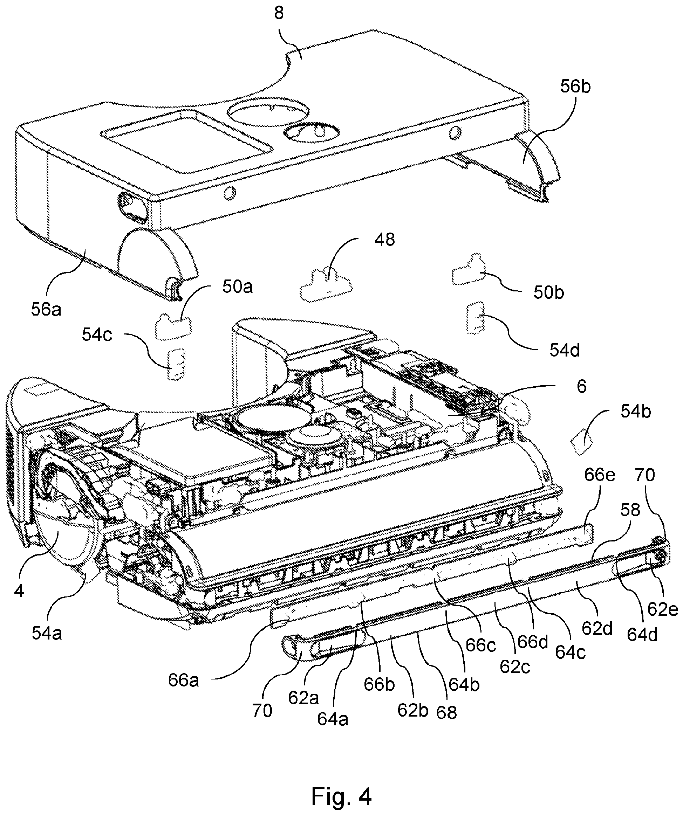

With reference to FIG. 4, to enable relative sliding movement between the chassis 4 and the shell 8, front and rear engagement means fix the body 6 and the shell 8 together so that they cannot be separated in the vertical direction, that is to say in a direction along the vertical axis 3, but permits the shell 8 to slide with respect to the body 6, and so the chassis 4, by a small amount in the lateral and longitudinal directions during a collision event. The robot 2 further comprises first and second biasing means for holding the shell 8 in an initial position with respect to the body 6 and chassis 4, and for retuning the shell 8 to the initial position following a collision event. The first and second biasing means comprises a plurality of spring-loaded devices, which, in this embodiment, include a spring centring assembly 48 and two spring arm assemblies 50a, 50b respectively. The spring centring assembly 48 is centrally mounted on the body 6, towards the front of the robot 2, and functions to hold the shell 8 in a laterally central position with respect to the body 6 and to return the shell 8 to the laterally central position following a collision event that imparts sufficient force acting laterally on the shell 8 to displace the shell 8 from the laterally central position. Each spring arm assembly 50a, 50b is rotatably mounted on a respective pin 52a, 52b located in the right and left front corners of the body 6. The pins 52a, 52b are upwardly standing, that is to say that they extend in the vertical direction, such that activating arms of the spring arm assemblies 50a, 50b are rotatable about the vertical direction between biased and actuated positions. The activating arms extend generally inwards towards the centre of the body 6 and, in their biased position, push forwardly against an inner surface of a front panel 53 of the shell 8, holding the shell 8 in its initial position forward of the body 6. During a collision event that imparts sufficient force acting longitudinally on the front of the shell 8, the shell 8 is pushed rearwardly against the biasing force of the spring arm assemblies 50a, 50b, moving at least one of the activating arms to the actuated position. The activating arms return to the biased position upon the removal of the longitudinally acting force, returning the shell 8 to its initial position.

The first sensing means comprises a first switch array, which, in this embodiment, comprises four switches 54a, 54b, 54c, 54d fixed to the chassis 4 and interfaced with the control system 18 of the robot 2 to send control signals to the controller 20 upon their activation. The switches 54a, 54b, 54c, 54d could be miniature snap-action switches, commonly known as "micro switches". Two of the switches 54a, 54b are located on either side of the chassis 4, adjacent respective side panels 56a, 56b of the shell 8, and are activated by lateral movement of the side panels 56a, 56b, relative to the body 6 and chassis 4, during a collision event to send a control signal to the controller 20, causing the drive system to take the appropriate corrective action.

Each of the remaining two switches 54c, 54d are located on the chassis 4 behind a respective spring arm assembly 50a, 50b. These switches 54c, 54d are activated by the activating arms when the activating arms move to the actuated position during a collision event that exerts a longitudinal force acting on the front of the shell 8 sufficient to displace the shell 8 rearwardly relative to the body 6 and chassis 4. The rearward displacement of the shell 8 during such a collision event may not be equal across the width of the shell 8. That is to say, if the resultant force from the longitudinal force is predominately acting on the left side of the front of the shell 8, then the rearward displacement of the shell 8 maybe be greater on the left side comparative to the displacement experienced by the right side of the shell 8, and vice versa. In such a situation, the activating arm of the left spring arm assembly 50b is moved to the actuated position to activate the left switch 54d to send a control signal causing the drive system to take the appropriate corrective action, whereas the right switch 54c might remain unactivated. Of course, if the resultant force from the longitudinal force is largely centrally acting, both switches 54c, 54d might be activated, and corrective action will be taken by the drive system based on the control signals received by the switches 54c, 54d.

The second principle part of the collision detection system 46, the bumper assembly 10, extends laterally across the front of the robot 2, ahead of the shell 8, for detecting collisions at the front of the robot 2. The bumper assembly 10 is positioned vertically to provide clearance at the base of the robot 2 to enable it to climb small obstacles, such as an edge of a carpet. The bumper assembly 10 has an effective mass, defined by inner and outer bumper sections 58, 68, that is substantially lower than the mass or the effective mass of the shell 8, meaning that it can detect front-end collisions with objects that do not exert a force sufficient to displace the shell 8, and so could otherwise go unnoticed by the collision detection system 46.

The inner bumper section 58 comprising a plurality of rigid segments 60 collectively arranged to extend laterally along the front of the robot 2. In this embodiment, the plurality of rigid segments 60 comprises five rigid segments 62a, 62b, 62c, 62d, 62e, but it will be understood by the skilled reader that the plurality of rigid segments 60 might include fewer or more segments. Each rigid segments 62a, 62b, 62c, 62d, 62e is displaceable relative to each other rigid segments 62a, 62b, 62c, 62d, 62e in response to a force applied thereto during a collision event between a unactuated position, in which the rigid segments 62a, 62b, 62c, 62d, 62e are largely coplanar, and an actuated position. In order to enable this displacement, the rigid segments 62a, 62b, 62c, 62d, 62e are connected by four flexible joints 64a, 64b, 64c, 64d. In this embodiment, the four flexible joints 64a, 64b, 64c, 64d are living hinges since they are inexpensive, robust and have a low mass, but the skilled reader will understand that other joints could also be used.

The second sensing means comprises a second switch array including a switch for each rigid segment 62a, 62b, 62c, 62d, 62e. Since there are five rigid segments 62a, 62b, 62c, 62d, 62e in this embodiment, the second switch array includes five switches 66a, 66b, 66c, 66d, 66e. Each of the five switches 66a, 66b, 66c, 66d, 66e is interfaced with the control system 18 and mounted to the chassis 4 in a forward facing orientation behind a respective rigid segment 62a, 62b, 62c, 62d, 62e and is activated to send a control signal causing the drive system to take the appropriate corrective action when its respective rigid segment 62a, 62b, 62c, 62d, 62e is displaced to its actuated position during a collision event.

The outer bumper section 68 covers the inner bumper section 58, defining a continuous surface extending across the plurality of rigid segments 62a, 62b, 62c, 62d, 62e of the inner bumper section 58. The outer bumper section 68 comprises corner sections, generally designated by 70, that extend beyond outermost rigid segments 62a, 62e and partially along the sides of the robot 2 to cover the intersections between the front and the sides of the robot 2. The corner sections 70 are deformable to displace the outermost rigid segments 62a, 62e in response to a force applied thereto during a collision with an obstacle oblique to the direction of travel of the robot 2. The outer bumper section 68 acts as a flexible barrier, preventing dirt and dust particles from entering the bumper assembly 10, and is configured to reversibly deform in response to a force applied thereto during a collision event to displace one or more of the rigid segments 62a, 62b, 62c, 62d, 62e.

The switches 54a, 54b, 54c, 54d, 66a, 66b, 66c, 66d, 66e, are activated in circumstances where the robot 2 bumps into or collides with an obstacle when the robot 2 is navigating around a room on a cleaning task. Such bump detection facility, as provided by the collision detection system 46, is desirable for instances in which sensor suite 22 of the robot 2 does not detect obstacles in time for drive system to carry out an evasive manoeuvre. Therefore, the collision detection system 46 is needed to detect collisions so that the robot 2 can take corrective action following a collision event. For example, based on control signals received from the collision detection system 46, the controller 20 may cause the drive system simply to reserve the robot 2 and then to resume forward movement in a different direction or, alternatively to stop forward movement, to turn 90° or 180° and then to resume forward movement once again. The corrective action may include a "reflex action" that immediately follows a collision event and reverses the manoeuvres of the robot 2 directly preceding the collision event.

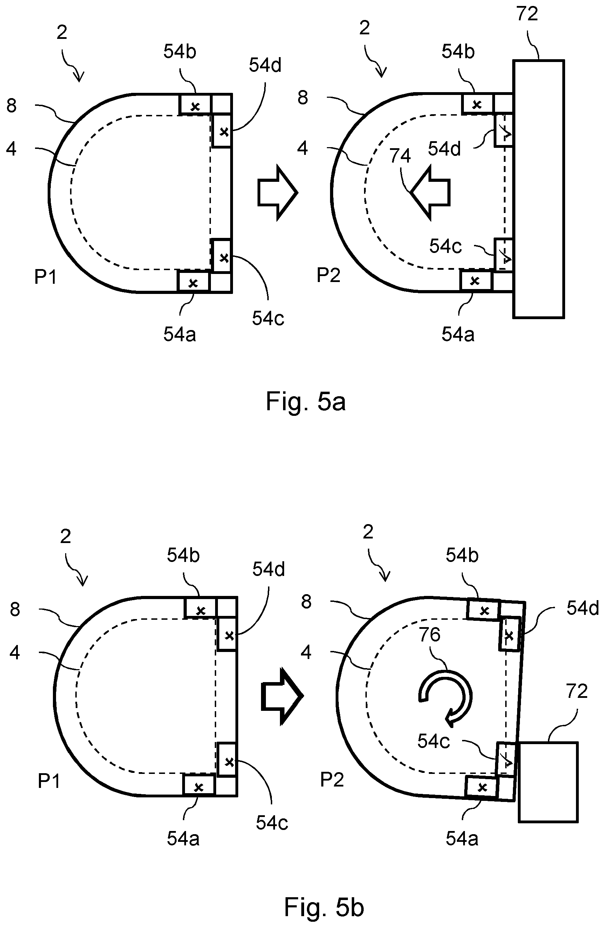

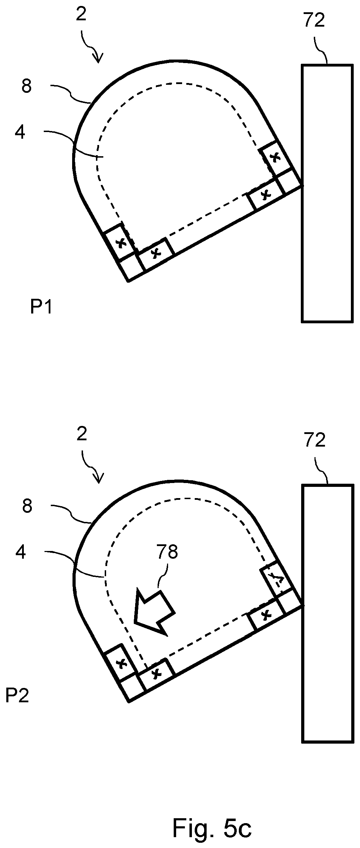

Activation of the switches 54a, 54b, 54c, 54d of the first switch array will now be explained with reference to FIG. 5a, 5b and 5c, which show a schematic representation of the shell 8 and chassis 4, illustrated in dashed lines, together with the switches 54a, 54b, 54c, 54d in different collision events with an obstacle 72. It will be understood that the relative sizes of the shell 8 and chassis 4 has been exaggerated in these figures only for the purpose of showing more clearly the relative movement therebetween. In these examples, the obstacle 72 has a ground clearance, such as a sofa, meaning that the switches 66a, 66b, 66c, 66d, 66e of the second switch array will not be activated, and it is only for this reason that they are not represented in FIG. 5a, 5b, 5c.

With reference to FIG. 5a, as the robot 2 moves forward towards the obstacle 72, as indicated by P₁, the shell 8 is held in its initial non-collision position with respect to the chassis 4, and none of the switches 54a, 54b, 54c, 54d have been activated, as indicated by the crosses. As the robot 2 continues to move forward it collides with the obstacle 72 in a dead ahead position, as indicated by P₂. This causes the shell 8 to move rearwardly along the longitudinal axis 5 with respect to the chassis 4, as indicated by arrow 74. The relative movement between the shell 8 and chassis 4 cause the activating arms of the spring arm assembles 50a, 50b to move from their biased positions to their actuated positions and, in doing so, activate the switches 54c, 54d substantially at the same time, as indicated by the check marks, to send respective control signals to the controller 20. The controller 20 is configured to discern the direction of the impact by monitoring the triggering of the switches 54a, 54b, 54c, 54d, 66a, 66b, 66c, 66d, 66e in the first and second switch arrays, and the relative timing between the activation of the switches 54a, 54b, 54c, 54d, 66a, 66b, 66c, 66d, 66e. In this example, therefore, because the switches 54c, 54d are activated simultaneously the controller 20 will determine that the obstacle 72 is the dead ahead position and control the drive system accordingly.

Turning to FIG. 5b, as with the previous example, in this example as the robot 2 moves forward towards the obstacle 72, as indicated by P₁, the shell 8 is held in its initial non-collision position with respect to the chassis 4, and none of the switches 54a, 54b, 54c, 54d have been activated. As the robot 2 continues to move forward, its right side collides with the obstacle 72, as shown by P₂. This causes the shell 8 to turn slightly relative to the chassis 4, as permitted by the movement of the shell 8 in the longitudinal and lateral directions. In this example, as the resultant force of the collision is predominantly acting on the front right side of the robot 2, the shell 8 rotates in a clockwise direction, as indicated by arrow 76. The skilled reader would, of course, understand that were the resultant force of the collision to act on the left side of the robot 2, then the shell 8 would rotate relative to the chassis 4 in an anticlockwise direction. The relative movement between the shell 8 and chassis 4 cause the activating arm of the spring arm assembly 50a to move to its actuated position and, in doing so, activate the switch 54c, as indicated by the check mark, to send a control signal to the controller 20. As the switch 54c has been activated and the other switches 54a, 54b, 54d remain unactivated, the controller 20 will determine that the obstacle 72 is located in front of the right side of the robot 2 and control the drive system accordingly.

Referring now to FIG. 5c, in this example, the robot 2 is moving towards the obstacle 72 at an oblique angle as shown by P₁, with its shell 8 is held in its initial non-collision position with respect to the chassis 4 such that none of the switches 54a, 54b, 54c, 54d have been activated. In P₂, the shell 8 has rotated anticlockwise into the obstacle 72 causing the shell 8 to move laterally relative to the chassis 4, as indicated by arrow 78, thereby activating switch 54b to send a control signal to the controller 20. The controller 20 will determine, based on the control signal, that the obstacle 72 is located to the left of the robot 2 and control the drive system to take the appropriate corrective action.

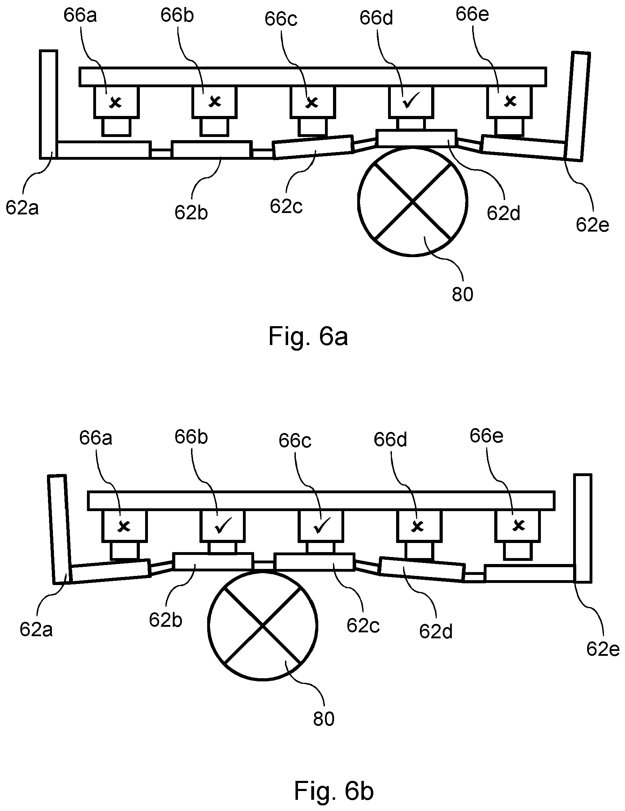

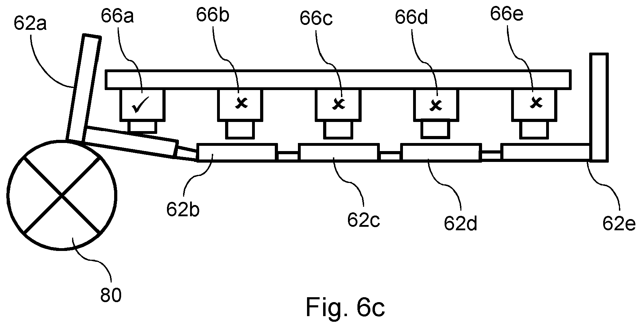

Activation of the switches 66a, 66b, 66c, 66d, 66e of the second switch array will now be explained with reference to FIG. 6a, 6b and 6c, which show an enlarged schematic representation of the bumper assembly 10, along with switches 66a, 66b, 66c, 66d, 66e in different collision events with an obstacle 80. In this instance, the obstacle 80 does not afford any ground clearance and has a reasonably low mass, such as, for example, a wine glass standing on the floor surface or the leg of a chair.

With reference to FIG. 6a, in this example, the robot 2 has collided with the obstacle 80 that, due to the low mass of the bumper assembly 10, has moved the rigid segment 62d to its actuated position, triggering the respective switch 66d to send a control signal to the controller 20, as indicated by the check mark. Because the displaced rigid segment 62d is connected to its neighbouring rigid segments 62c, 62e by flexible joints 64c, 64d, those neighbouring rigid segments 62c, 62e are also displaced into positions between their unactuated and actuated positions without triggering their respective switches 66c, 66e, as indicated by the cross marks. The two remaining switches 66a, 66b also remain unactivated in this instance. The controller 20 is configured to discern the direction of the collision and the size of the obstacle, relative to each rigid segment 62a, 62b, 62c, 62d, 62e, by monitoring the triggering of the switches 66a, 66b, 66c, 66d, 66e and control the drive system accordingly. In this example, the obstacle 80 has impacted a single rigid segment 62d, indicating to the controller 20 that the width of the obstacle 80 does not exceed the width of the rigid segment 62d. However, situations arise in which the same obstacle 80 displaced two rigid segments 62b, 62c as shown in FIG. 6b. In such situations, the controller 20 determines that the width of the obstacle 80 does exceed the combined width of the rigid segments 62b, 62c and control the drive system to take corrective action on that basis.

As mentioned above, the corner sections 70 of the outer bumper section 68 are deformable to displace the outermost rigid segments 62a, 62e in response to a force applied thereto during a collision with the obstacle 80 when it is located oblique to the direction of travel of the robot 2, an example of which is shown in FIG. 6c. This situation might also arise if the robot 2 rotates into the obstacle 80. In this example, only switch 66a is activated by the displacement of the outermost rigid segment 62a to its actuated position to issue a control signal to the controller 20 causing the drive system to take corrective action, and all of the remaining switches 66b, 66c, 66d, 66e remain unactivated.

Many variations are possible without departing from the inventive concept. For example, the bumper assembly 10 is shown as extending laterally across the front of the robot 2, but the invention could also be performed with bumper assemblies 10 extending across other sides of the robot 2. Further, there is no requirement according to the inventive concept for the bumper assembly 10 to extend across the entirety of the front of the robot 2, and embodiments are envisioned in which a bumper assembly 10 extends partway across a side of the robot 2.

The invention has been described with reference to a particular embodiment thereof in order to illustrate the principles of operation. The above description is thus by way of illustration and directional references (including: upper, lower, upward, downward, left, right, leftward, rightward, top, bottom, side, above, below, front, middle, back, vertical, horizontal, height, depth width, and so forth) and any other terms having an implied orientation refer only to the orientation of the features as shown in the accompanying drawings. They should not be read to be requirements or limitations, particularly as to the position, orientation, or use of the invention unless specifically set forth in the appended claims. Connection references (e.g., attached, coupled, connected, joined, secured and the like) are to be construed broadly and may include intermediate members between a connection of elements and relative movement between elements. As such, connection references do not necessarily infer that two elements are directly connected and in fixed relation to each other, unless specifically set forth in the appended claims.

## Claims

1. A mobile robot (2) comprising:
a chassis (4);
a drive system (14); and,
a collision detection system (46), **characterised in** the collision detection system comprising a first body part (8) and a second body part (10) of the mobile robot, the first and second body parts being disconnected and moveable relative to the chassis in response to a collision with an object; and,
first and second sensing means configured to sense relative movement between the chassis and the first and second body parts respectively and, in a collision event, to send a control signal causing the drive system to take corrective action, wherein the mass of the second body part is substantially lower than the mass of the first body part.

2. The mobile robot according to claim 1, wherein the second body part (10) is a bumper assembly moveable relative to the chassis in response to a force applied thereto during a collision event.

3. The mobile robot according to claim 2, wherein the bumper assembly comprises an inner bumper section (58) comprising a plurality of rigid segments (60) collectively arranged to extend laterally along one side the mobile robot, the inner bumper section being configured such that each rigid segment of the plurality of rigid segments is displaceable relative to the other rigid segments of the plurality of rigid segments in response to a force applied thereto during a collision event,
preferably wherein the plurality of rigid segments (60) are connected by flexible joints (64), preferably wherein the flexible joints (64) are living hinges.

4. The mobile robot according to claim 3, wherein the second sensing means comprises a second switch array, each switch of the second switch array being located between the chassis (4) and a respective rigid segment of the plurality of rigid segments (62a, 62b, 62c, 62d, 62e) and wherein the collision detection system is operable to cause the drive arrangement to take corrective action if a switch of the second switch array is actuated by the displacement of its respective rigid segment of the plurality of rigid segments during a collision event.

5. The mobile robot according to any one of claims 3 to 4, wherein the bumper assembly comprises an outer bumper section (68) adjacent the inner bumper section (58), the outer bumper section being reversibly deformable in response to a force applied thereto during a collision event to displace one or more rigid segments of the plurality of rigid segments.

6. The mobile robot according to claim 5, wherein the outer bumper section (68) defines a continuous surface substantially extending across the plurality of rigid segments of the inner bumper section (58).

7. The mobile robot according to claim 5 or 6, wherein the outer bumper section (68) comprises corner sections covering intersections between the one side and adjacent sides of the mobile robot, the corner sections being deformable to displace the outermost rigid segments of the plurality of rigid segments in response to a force applied thereto during a collision with an object oblique to the direction of travel of the mobile robot.

8. The mobile robot according to any one of claims 5 to 7, wherein the mass of the bumper assembly is defined by the inner and outer bumper sections (58, 68).

9. The mobile robot according to any preceding claim, wherein the first body part (8) is an outer shell displaceable relative to the chassis (4) in the longitudinal and lateral directions of the mobile robot in response to a force applied thereto during a collision event.

10. The mobile robot according to claim 9, further comprising a first biasing means connected to the chassis (4) for applying a restoring force to the outer shell following a lateral displacement of the outer shell in order to return the outer shell to its initial lateral position with respect to the chassis.

11. The mobile robot according to claim 9 or 10, further comprising a second biasing means for applying a restoring force to the outer shell following a longitudinal displacement of the outer shell in order to return the outer shell to its initial longitudinal position with respect to the chassis (4).

12. The mobile robot according to any one of claims 9 to 11, wherein the first sensing means comprises a first switch array (54a, 54b, 54c, 54d), each switch of the first switch array being located between the chassis (4) and the outer shell, wherein the collision detection system is operable to cause the drive arrangement to take corrective action if a switch of the first switch array is actuated by the displacement of the outer shell during a collision event.

13. The mobile robot according to claim 12, wherein at least one switch of the first switch array (54a, 54b, 54c, 54d) is arranged to be actuated by a lateral displacement of the outer shell and at least one other switch of the first switch array is arranged to be actuated by a longitudinal displacement of the outer shell,
preferably wherein the second biasing means comprises an activating arm pivotally connected to the chassis, the activating arm being moveable by a longitudinal displacement of the outer shell to actuate the at least one other switch of the first switch array (54a, 54b, 54c, 54d).

14. The mobile robot according to any one of claims 11 to 13, further comprising at least one other component rigidly connected to the outer shell, wherein the mass of the outer shell is defined by the outer shell and the least one other component.

15. The mobile robot according to any preceding claim, wherein the corrective action comprises reflex action that immediately follows the collision event, the reflex action comprises reversing the manoeuvres of the robot immediately preceding the collision event.

## Patentansprüche

1. Mobiler Roboter (2), umfassend:
ein Chassis (4);
ein Antriebssystem (14); und
ein Kollisionserkennungssystem (46), **dadurch gekennzeichnet, dass** das Kollisionserkennungssystem einen ersten Körperteil (8) und einen zweiten Körperteil (10) des mobilen Roboters umfasst, wobei der erste und der zweite Körperteil voneinander getrennt sind und als Reaktion auf eine Kollision mit einem Objekt relativ zu dem Chassis bewegbar sind; und
erste und zweite Sensormittel, die dazu ausgelegt sind, eine Relativbewegung zwischen dem Chassis und dem ersten bzw. zweiten Körperteil zu erfassen und bei einem Kollisionsereignis ein Steuersignal zu senden, das bewirkt, dass das Antriebssystem eine Korrekturmaßnahme ergreift, wobei die Masse des zweiten Körperteils wesentlich geringer ist als die Masse des ersten Körperteils.

2. Mobiler Roboter nach Anspruch 1, wobei das zweite Körperteil (10) eine Stoßfängeranordnung ist, die als Reaktion auf eine Kraft, die darauf während eines Kollisionsereignisses ausgeübt wird, relativ zu dem Chassis beweglich ist.

3. Mobiler Roboter nach Anspruch 2, wobei die Stoßfängeranordnung einen inneren Stoßfängerabschnitt (58) umfasst, der eine Mehrzahl starrer Segmente (60) umfasst, die gemeinsam so angeordnet sind, dass sie sich seitlich entlang einer Seite des mobilen Roboters erstrecken, wobei der innere Stoßfängerabschnitt dazu ausgelegt ist, dass jedes starre Segment der Mehrzahl starrer Segmente als Reaktion auf eine während eines Kollisionsereignisses darauf ausgeübte Kraft relativ zu den anderen starren Segmenten der Mehrzahl starrer Segmente verlagerbar ist,
vorzugsweise wobei die Mehrzahl starrer Segmente (60) durch flexible Gelenke (64) verbunden sind, vorzugsweise wobei die flexiblen Gelenke (64) Filmscharniere sind.

4. Mobiler Roboter nach Anspruch 3, wobei die zweiten Sensormittel eine zweite Schalteranordnung umfassen, wobei jeder Schalter der zweiten Schalteranordnung zwischen dem Chassis (4) und einem jeweiligen starren Segment der Mehrzahl starrer Segmente (62a, 62b, 62c, 62d, 62e) angeordnet ist, und wobei das Kollisionserkennungssystem betreibbar ist, das Antriebssystem zu veranlassen, eine Korrekturmaßnahme zu ergreifen, wenn ein Schalter der zweiten Schalteranordnung durch die Verlagerung seines jeweiligen starren Segments der Mehrzahl starrer Segmente während eines Kollisionsereignisses betätigt wird.

5. Mobiler Roboter nach einem der Ansprüche 3 bis 4, wobei die Stoßfängeranordnung einen äußeren Stoßfängerabschnitt (68) benachbart zu dem inneren Stoßfängerabschnitt (58) umfasst, wobei der äußere Stoßfängerabschnitt als Reaktion auf eine während eines Kollisionsereignisses darauf ausgeübte Kraft reversibel verformbar ist, um ein oder mehrere starre Segmente der Mehrzahl starrer Segmente zu verlagern.

6. Mobiler Roboter nach Anspruch 5, wobei der äußere Stoßfängerabschnitt (68) eine durchgehende Oberfläche definiert, die sich im Wesentlichen über die Mehrzahl starrer Segmente des inneren Stoßfängerabschnitts (58) erstreckt.

7. Mobiler Roboter nach Anspruch 5 oder 6, wobei der äußere Stoßfängerabschnitt (68) Eckabschnitte umfasst, die Übergänge zwischen der einen Seite und benachbarten Seiten des mobilen Roboters abdecken, wobei die Eckabschnitte verformbar sind, um die äußersten starren Segmente der Mehrzahl starrer Segmente als Reaktion auf eine darauf ausgeübte Kraft während einer Kollision mit einem Objekt, das schräg zur Fahrtrichtung des mobilen Roboters angeordnet ist, zu verlagern.

8. Mobiler Roboter nach einem der Ansprüche 5 bis 7, wobei die Masse der Stoßfängeranordnung durch den inneren und den äußeren Stoßfängerabschnitt (58, 68) definiert ist.

9. Mobiler Roboter nach einem der vorhergehenden Ansprüche, wobei der erste Körperteil (8) eine äußere Hülle ist, die als Reaktion auf eine während eines Kollisionsereignisses darauf ausgeübte Kraft relativ zu dem Chassis (4) in Längs- und Querrichtung des mobilen Roboters verlagerbar ist.

10. Mobiler Roboter nach Anspruch 9, ferner umfassend ein erstes Vorspannmittel, das mit dem Chassis (4) verbunden ist, um nach einer seitlichen Verlagerung der äußeren Hülle eine Rückstellkraft auf die äußere Hülle auszuüben, um die äußere Hülle in ihre anfängliche seitliche Position relativ zu dem Chassis zurückzuführen.

11. Mobiler Roboter nach Anspruch 9 oder 10, ferner umfassend ein zweites Vorspannmittel, um nach einer Längsverlagerung der äußeren Hülle eine Rückstellkraft auf die äußere Hülle auszuüben, um die äußere Hülle in ihre anfängliche Längsposition relativ zu dem Chassis (4) zurückzuführen.

12. Mobiler Roboter nach einem der Ansprüche 9 bis 11, wobei die ersten Sensormittel eine erste Schalteranordnung (54a, 54b, 54c, 54d) umfassen, wobei jeder Schalter der ersten Schalteranordnung zwischen dem Chassis (4) und der äußeren Hülle angeordnet ist, wobei das Kollisionserkennungssystem betreibbar ist, das Antriebssystem zu veranlassen, eine Korrekturmaßnahme zu ergreifen, wenn ein Schalter der ersten Schalteranordnung durch die Verlagerung der äußeren Hülle während eines Kollisionsereignisses betätigt wird.

13. Mobiler Roboter nach Anspruch 12, wobei mindestens ein Schalter der ersten Schalteranordnung (54a, 54b, 54c, 54d) dazu angeordnet ist, durch eine seitliche Verlagerung der äußeren Hülle betätigt zu werden, und mindestens ein weiterer Schalter der ersten Schalteranordnung dazu angeordnet ist, durch eine Längsverlagerung der äußeren Hülle betätigt zu werden, vorzugsweise wobei das zweite Vorspannmittel einen Aktivierungsarm umfasst, der schwenkbar mit dem Chassis verbunden ist, wobei der Aktivierungsarm durch eine Längsverlagerung der äußeren Hülle bewegbar ist, um den mindestens einen weiteren Schalter der ersten Schalteranordnung (54a, 54b, 54c, 54d) zu betätigen.

14. Mobiler Roboter nach einem der Ansprüche 11 bis 13, ferner umfassend mindestens eine weitere Komponente, die starr mit der äußeren Hülle verbunden ist, wobei die Masse der äußeren Hülle durch die äußere Hülle und die mindestens eine weitere Komponente definiert ist.

15. Mobiler Roboter nach einem der vorhergehenden Ansprüche, wobei die Korrekturmaßnahme eine Reflexmaßnahme umfasst, die unmittelbar auf das Kollisionsereignis folgt, wobei die Reflexmaßnahme das Umkehren der dem Kollisionsereignis unmittelbar vorausgehenden Manöver des Roboters umfasst.

## Revendications

1. Robot mobile (2) comprenant :
un châssis (4) ;
un système d'entraînement (14) ; et
un système de détection de collision (46), **caractérisé en ce que** le système de détection de collision comprend une première partie de corps (8) et une seconde partie de corps (10) du robot mobile, les première et seconde parties de corps étant séparées et mobiles par rapport au châssis en réponse à une collision avec un objet ; et
des premier et second moyens de détection conçus pour détecter un mouvement relatif entre le châssis et les première et seconde parties de corps respectivement et, en cas de collision, pour envoyer un signal de commande amenant le système d'entraînement à prendre une mesure corrective, la masse de la seconde partie de corps étant sensiblement inférieure à la masse de la première partie de corps.

2. Robot mobile selon la revendication 1, dans lequel la seconde partie de corps (10) est un ensemble pare-chocs mobile par rapport au châssis en réponse à une force appliquée à celui-ci pendant un événement de collision.

3. Robot mobile selon la revendication 2, dans lequel l'ensemble pare-chocs comprend une section de pare-chocs intérieure (58) comprenant une pluralité de segments rigides (60) agencés collectivement pour s'étendre latéralement le long d'un côté du robot mobile, la section de pare-chocs intérieure étant conçue de telle sorte que chaque segment rigide de la pluralité de segments rigides peut se déplacer par rapport aux autres segments rigides de la pluralité de segments rigides en réponse à une force appliquée à celui-ci pendant un événement de collision,
de préférence, dans lequel la pluralité de segments rigides (60) sont reliés par des raccords flexibles (64), de préférence dans lequel les raccords flexibles (64) sont des charnières souples.

4. Robot mobile selon la revendication 3, dans lequel le second moyen de détection comprend une seconde série de commutateurs, chaque commutateur de la seconde série de commutateurs étant situé entre le châssis (4) et un segment rigide respectif de la pluralité de segments rigides (62a, 62b, 62c, 62d, 62e), et dans lequel le système de détection de collision peut être actionné pour amener le dispositif d'entraînement à prendre une mesure corrective si un commutateur de la seconde série de commutateurs est actionné par le déplacement de son segment rigide respectif de la pluralité de segments rigides pendant un événement de collision.

5. Robot mobile selon l'une quelconque des revendications 3 et 4, dans lequel l'ensemble pare-chocs comprend une section de pare-chocs extérieure (68) adjacente à la section de pare-chocs intérieure (58), la section de pare-chocs extérieure étant déformable de manière réversible en réponse à une force appliquée à celle-ci pendant un événement de collision pour déplacer un ou plusieurs segments rigides de la pluralité de segments rigides.

6. Robot mobile selon la revendication 5, dans lequel la section de pare-chocs extérieure (68) définit une surface continue s'étendant sensiblement transversalement à la pluralité de segments rigides de la section de pare-chocs intérieure (58).

7. Robot mobile selon la revendication 5 ou 6, dans lequel la section de pare-chocs extérieure (68) comprend des sections de coin couvrant des intersections entre ledit côté et des côtés adjacents du robot mobile, les sections de coin étant déformables pour déplacer les segments rigides les plus à l'extérieur de la pluralité de segments rigides en réponse à une force appliquée à celles-ci pendant une collision avec un objet oblique par rapport à la direction de déplacement du robot mobile.

8. Robot mobile selon l'une quelconque des revendications 5 à 7, dans lequel la masse de l'ensemble pare-chocs est définie par les sections de pare-chocs intérieure et extérieure (58, 68).

9. Robot mobile selon l'une quelconque des revendications précédentes, dans lequel la première partie de corps (8) est une enveloppe extérieure déplaçable par rapport au châssis (4) dans les directions longitudinale et latérale du robot mobile en réponse à une force appliquée à celle-ci pendant un événement de collision.

10. Robot mobile selon la revendication 9, comprenant en outre un premier moyen de sollicitation relié au châssis (4) pour appliquer une force de rappel à l'enveloppe extérieure après un déplacement latéral de l'enveloppe extérieure afin de ramener l'enveloppe extérieure à sa position latérale initiale par rapport au châssis.

11. Robot mobile selon la revendication 9 ou 10, comprenant en outre un second moyen de sollicitation pour appliquer une force de rappel à l'enveloppe extérieure après un déplacement longitudinal de l'enveloppe extérieure afin de ramener l'enveloppe extérieure à sa position longitudinale initiale par rapport au châssis (4) .

12. Robot mobile selon l'une quelconque des revendications 9 à 11, dans lequel le premier moyen de détection comprend une première série de commutateurs (54a, 54b, 54c, 54d), chaque commutateur de la première série de commutateurs étant situé entre le châssis (4) et l'enveloppe extérieure, dans lequel le système de détection de collision peut être actionné pour amener le dispositif d'entraînement à prendre une mesure corrective si un commutateur de la première série de commutateurs est actionné par le déplacement de l'enveloppe extérieure pendant un événement de collision.

13. Robot mobile selon la revendication 12, dans lequel au moins un commutateur de la première série de commutateurs (54a, 54b, 54c, 54d) est disposé pour être actionné par un déplacement latéral de l'enveloppe extérieure et au moins un autre commutateur de la première série de commutateurs est disposé pour être actionné par un déplacement longitudinal de l'enveloppe extérieure,
de préférence, dans lequel le second moyen de sollicitation comprend un bras d'activation relié pivotant au châssis, le bras d'activation pouvant être déplacé par un déplacement longitudinal de l'enveloppe extérieure pour actionner l'au moins un autre commutateur de la première série de commutateurs (54a, 54b, 54c, 54d).

14. Robot mobile selon l'une quelconque des revendications 11 à 13, comprenant en outre au moins un autre composant relié rigidement à l'enveloppe extérieure, dans lequel la masse de l'enveloppe extérieure est définie par l'enveloppe extérieure et l'au moins un autre composant.

15. Robot mobile selon l'une quelconque des revendications précédentes, dans lequel la mesure corrective comprend une action réflexe qui suit immédiatement l'événement de collision, l'action réflexe comprenant l'inversion des manœuvres du robot précédant immédiatement l'événement de collision.
